# EUROPEAN PATENT SPECIFICATION

(11) **EP 4 340 328 B1**
(45) Date of publication and mention of the grant of the patent: **12.11.2025**
(21) Application number: 22196364.8
(22) Date of filing: 19.09.2022
(51) Int. Cl.: H04L 61/2596

(54) **METHODS AND APPARATUS FOR LINKING COMMUNICATIONS BETWEEN ADDRESSED BUILDING AUTOMATION NETWORKS**
VERFAHREN UND VORRICHTUNG ZUR VERBINDUNG VON VERBINDUNGEN ZWISCHEN ADRESSIERBAREN GEBÄUDEAUTOMATISIERUNGSNETZWERKEN
PROCÉDÉS ET APPAREIL POUR RELIER DES COMMUNICATIONS ENTRE DES RÉSEAUX D'AUTOMATISATION DE BÂTIMENT ADRESSÉS

(43) Date of publication of application: 20.03.2024
(73) Proprietor: Helvar Oy Ab, 02150 Espoo (FI)
(72) Inventor: VESTERINEN, Matti, 02150 Espoo (FI); AHOLA, Jukka, 02150 Espoo (FI)
(74) Representative: Papula Oy

(56) References cited:
- US-A1- 2022 109 659
- SRISURESH M HOLDREGE LUCENT TECHNOLOGIES P: "IP Network Address Translator (NAT) Terminology and Considerations; rfc2663.txt", IP NETWORK ADDRESS TRANSLATOR (NAT) TERMINOLOGY AND CONSIDERATIONS; RFC2663.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 August 1999 (1999-08-01), XP015008446
- SEIFRIED STEFAN ET AL: "KNX IPv6: Design issues and proposed architecture", 2017 IEEE 13TH INTERNATIONAL WORKSHOP ON FACTORY COMMUNICATION SYSTEMS (WFCS), IEEE, 31 May 2017 (2017-05-31), pages 1 - 10, XP033129114, DOI: 10.1109/WFCS.2017.7991951

## Description

### FIELD OF THE INVENTION

The invention is related to the field of controlling a building automation system, such as an automated lighting system for example. In particular, the invention is related to controlling a system in which two addressed building automation networks should cooperate.

### BACKGROUND OF THE INVENTION

Building automation networks comprise numerous electronic devices that should operate in a particular way in order to provide service to the users in a building or other region of a constructed environment. Lighting networks are commonly used as examples, because their operation is easy to explain in an illustrative way. However, the references to lighting in this text should not be construed as limiting, as the principles and solutions can be generalised to all kinds of building automation unless otherwise explicitly stated.

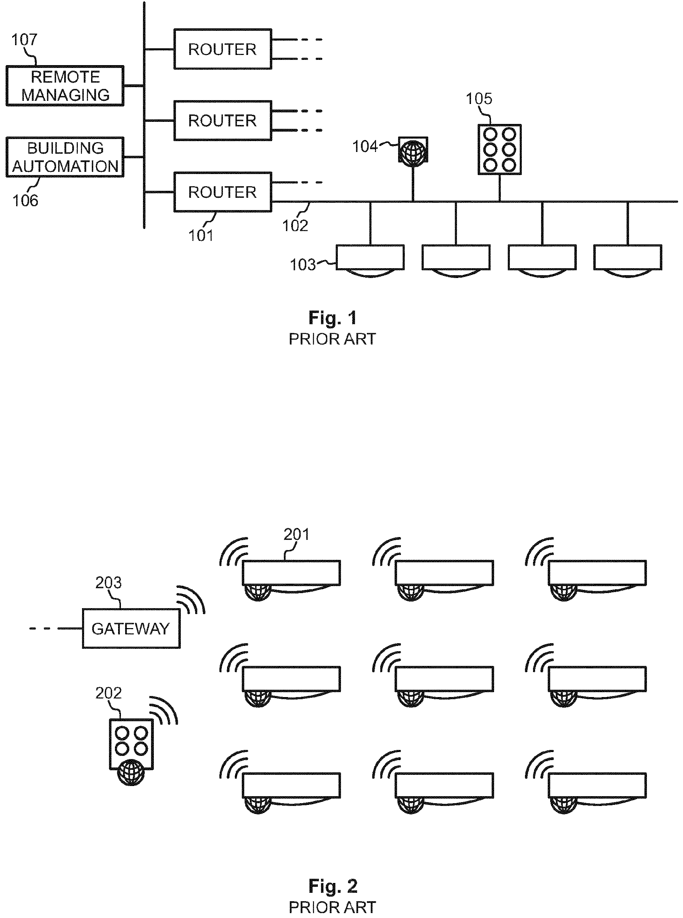

Fig. 1 shows a known wired lighting network in a building. The network comprises several controlling devices that may be called routers, control modules, lighting controllers, application controllers, or the like. Router 101 is shown as an example in fig. 1. Each router may control one or more (here: two) subnets, such as DALI subnets, in which DALI comes from Digital Addressable Lighting Interface. As an example, subnet 102 is shown in fig. 1. A subnet consists of devices such as luminaires 103, sensors 104, control panels 105, and the like. Each router is coupled to a backbone control network 106, such as an Ethernet network, which may link the routers with other devices such as further building automation devices 107 and remote managing stations 108. The wired subnet 102 constitutes a bidirectional communications bus for sensor outputs, key press indications, control commands, feedback information, and the like for devices connected to the bus.

Fig. 2 shows a known wireless lighting network in a building. The exemplary network shown in fig. 2 comprises sensor-equipped luminaires 201, a (sensor-equipped) control panel 202, and a gateway 203 for linking the wireless lighting network with external networks such as the Internet. Contrary to the network of fig. 1, no wires are needed for communications between the networked devices, because they communicate via wireless transmissions such as radio signals. The wireless communications network may be a so-called mesh network, in which the communicating nodes need not be hierarchically organised.

Addressing, in the sense of device identification, is typically needed both in wired building automation networks like the one in fig. 1 and in wireless ones like that in fig. 2. Devices that make transmissions, like sensors for example, include their identifier in the transmission so that recipients know, which sensor made the detection and can react appropriately. Control commands to luminaires and other actuator devices may be addressed so that only the device(s) in question know to execute the required operation. In the wireless network of fig. 2, the sensor-equipped luminaires may be programmed to recognize the identifiers of neighbouring luminaires and react appropriately when one of them announces having detected the presence of a user.

In some cases, a building or other target environment may comprise two or more building automation networks of different kinds. For example, the corridors and common spaces of a large office may be equipped with luminaires forming a wireless, mesh-type lighting network, while the luminaires in meeting rooms may be organized into groups of a wired lighting network. The idea of such a combination of networks could be to cater for the needs of more arbitrarily moving users in the common spaces through the self-organizing operation of the wireless lighting network and to ensure well-defined and deterministic utilisation of lighting scenes in the meeting rooms by programming the wired lighting network(s) appropriately.

Coordinated operation of the two different networks might lead to even further advantageous effects, like more favourable user experience, optimised power consumption, and the like. A simple example of coordinated operation in the example above would involve making the wired lighting of a meeting room communicate a "keep" signal to the nearest wireless luminaires in the corridor, so that the participants of a meeting would not see the adjacent corridor as dark and intimidating. Problems may arise, however, because of the different communication practices. As an example, each DALI subnet has a relatively limited address space that only allows 64 individual addresses. A basic approach in DALI involves giving each sensor and each luminaire an address of its own. If one would consider straightforwardly combining the relatively limited wireless lighting network of fig. 2 with one of the DALI subnets in fig. 1, it would reserve 21 addresses: nine for the luminaires, another nine for their sensors, two for the sensor-equipped control panel, and one for the gateway. A single sensor device might need even two or more addresses, if it senses different quantities like movement and light level, making it appear to the network as two separate sensors.

An obvious solution would be to add more routers to the wired building automation network, so that the additional DALI subnets could accommodate the required number of devices of the wireless network in their address space. However, a router is a relatively expensive component of the system, so such a solution could become unattractively expensive.

A prior art document IP Network Address Translator (NAT) Terminology and Considerations, rfc2663.txt, accessible through the publication code XP015008446, describes some basic concepts and definitions applicable in network address translations between two IP-networks.

Another prior art document US 2022/109659 describes the use of a non-IP subnetwork as a part of the same network that also includes an IP subnetwork. A gateway device provides virtual-IP-type communications between a frontend device in the first-mentioned subnetwork and a backend device in the second subnetwork.

Another prior art document KNX IPv6: Design Issues and Proposed Architecture, by Stefan Seifried et al, IEEE 13th international workshop on factory communication systems, accessible through the publication code XP033129114, proposes usage of IPv6 networking as a native medium within the KNX framework.

### SUMMARY

It is an objective to present a method and an apparatus that involves more tightly knit cooperation between a wired building automation network and a wireless building automation network. In particular, it is an objective to flexibly utilise in one of the networks functionalities for which at least some framework exists already in the other network. A further objective is to enable such cooperation without having to implement far-reaching or complicated changes to the known operation of devices that are already used in the wired and wireless building automation networks.

These and other advantageous objectives are met by providing a gateway node between the networks and allowing the gateway node to forward and map communications between the networks so that a selected number of nodes of the wireless network may commonly appear as a virtual node of the wired network.

According to a first aspect, there is provided an apparatus for linking communications between a first network, which is a wired, addressed lighting network applying master-slave type communications on a wired control bus, and a second network, which is a wireless, addressed lighting network applying a communications protocol in which each communicating device may independently take part in the exchange of control information between devices. The apparatus comprises a first communications transceiver for communicating with devices of said first network, a second communications transceiver for communicating with devices of said second network, and a linking functionality coupled between said first and second communications transceivers. Said linking functionality is configured to receive and store a plurality of addresses of an addressing scheme used in said first network to identify nodes of said first network. Said linking functionality is configured to perform mapping and forwarding of communications between said first and second networks so that, with respect to communications and in accordance with a stored set of rules, it makes selectively none, one or more nodes of said second network emulate a respective virtual node of said first network to which virtual node said linking functionality has associated one of said stored plurality of addresses. Making one node of said second network emulate a respective virtual node of said first network involves said first network communicating with a wireless node of the second network as if it were communicating with a node of said first network. Making more nodes of said second network emulate a respective virtual node of said first network involves said first network communicating with a plurality of wireless nodes of the second network as if it were communicating with a node of said first network. Making no node of said second network emulate a respective virtual node of said first network involves said first network communicating with said apparatus as if it were communicating with a node of said first network, without communicating with any wireless node of the second network.

The linking functionality is configured to associate a first address of said stored plurality of addresses with a group of respective receiving nodes of the second network, said group of receiving nodes thus representing a common virtual receiving node of said first network. In accordance with a second rule of said stored set of rules, the linking functionality may then be configured to forward information it received for said common virtual receiving node in the first network in the form of information to said group of receiving nodes in the second network. This involves at least the advantage that a plurality of receiving nodes in the second network may be made to contribute to the combined operation of the networks without having to give each of them an individual node address of the first network.

According to an embodiment, the linking functionality is configured to associate a second address of said stored plurality of addresses with a group of transmitting nodes of the second network, said group of transmitting nodes thus representing a common virtual transmitting node of said first network. In accordance with a first rule of said stored set of rules, the linking functionality may then be configured to combine transmissions received from said group of transmitting nodes into a common transmission and to transmit the common transmission in the first network as if coming from said common virtual transmitting node. This involves at least the advantage that a plurality of transmitting nodes in the second network may be made to contribute to the combined operation of the networks without having to give each of them an individual node address of the first network.

According to an embodiment, the linking functionality is configured to receive said transmissions from said group of transmitting nodes in accordance with a transmissions schedule of said second network and to transmit said common transmission in accordance with a transmissions schedule of said first network. This involves at least the advantage that both networks may continue operating according to their previously defined schedules, and yet the communications between the networks may be fluent.

According to an embodiment, the linking functionality is configured to transmit in the first network a request to receive an address for a virtual node device of the first network, in response to there being stored an emulating rule among said set of rules without any address yet of the virtual node to be emulated. This involves at least the advantage that addresses of the first network need to be allocated for this purpose only according to actual need.

According to an embodiment, in accordance with a third rule of said stored set of rules, the linking functionality is configured to make none of the nodes of the second network emulate a respective virtual node of the first network, by executing at least one of three actions. It may transmit a dummy transmission in the first network as a representation of a respective transmission from said respective virtual node. It may ignore a transmission to said respective virtual node in the first network. It may store information directed to said respective virtual node in the first network for later use. This involves at least the advantage that the first network may remain ignorant of the fact that some of the nodes it believes to exists do not actually exist at all.

According to an embodiment, at least one rule of said set of rules is a conditional rule. The linking functionality may then be configured to, consequently, make selectively none, one or more nodes of said second network emulate a respective virtual node of said first network, to which virtual node said linking functionality has associated one of said stored plurality of addresses, only if a precondition of said conditional rule is fulfilled. This involves at least the advantage of contributing even further versatility to the combined operation of the two networks.

According to an embodiment, said precondition comprises a time condition, so that the linking functionality is configured to, consequently, make selectively none, one or more nodes of said second network emulate a respective virtual node of said first network, to which virtual node said linking functionality has associated one of said stored plurality of addresses, only during a predetermined period of time. This involves at least the advantage that the combined operation of the networks may be made deterministically dependent on aspects of time.

According to an embodiment, said precondition comprises a trigger event condition, so that the linking functionality is configured to, consequently, make selectively none, one or more nodes of said second network emulate a respective virtual node of said first network, to which virtual node said linking functionality has associated one of said stored plurality of addresses, only if a predetermined trigger event has occurred first. This involves at least the advantage that the combined operation of the networks can be controlled very accurately and definitively.

According to a second aspect, there is provided a method for linking communications between a first network, which is a wired, addressed lighting network applying master-slave type communications on a wired control bus, and a second network, which is a wireless, addressed lighting network applying a communications protocol in which each communicating device may independently take part in the exchange of control information between devices. The method comprises receiving and storing a plurality of addresses of an addressing scheme used in said first network to identify nodes of said first network, and mapping and forwarding communications between said first and second networks. Said mapping and forwarding involves, with respect to communications and in accordance with a stored set of rules, selectively making none, one or more nodes of said second network emulate a respective virtual node of said first network to which virtual node said linking functionality has associated one of said stored plurality of addresses. Making one node, more nodes, or no node of said second network emulate a respective virtual node of said first network is defined in the same way as above.

The method comprises associating a first address of said stored plurality of addresses with a group of respective receiving nodes of the second network, said group of receiving nodes thus representing a common virtual receiving node of said first network. In accordance with a second rule of said stored set of rules, information received for said common virtual receiving node may then be forwarded in the first network in the form of information to said group of receiving nodes in the second network. This involves at least the advantage that a plurality of receiving nodes in the second network may be made to contribute to the combined operation of the networks without having to give each of them an individual node address of the first network.

According to an embodiment, the method comprises associating a second address of said stored plurality of addresses with a group of transmitting nodes of the second network, said group of transmitting nodes thus representing a common virtual transmitting node of said first network. Then, in accordance with a first rule of said stored set of rules, transmissions received from said group of transmitting nodes may be combined into a common transmission and the common transmission may be transmitted in the first network as if coming from said common virtual transmitting node. This involves at least the advantage that a plurality of transmitting nodes in the second network may be made to contribute to the combined operation of the networks without having to give each of them an individual node address of the first network.

According to an embodiment, the method comprises transmitting in the first network a request to receive an address for a virtual node device of the first network, in response to there being stored an emulating rule among said set of rules without any address yet of the virtual node to be emulated. This involves at least the advantage that addresses of the first network need to be allocated for this purpose only according to actual need.

According to an embodiment, said making of none of the nodes of the second network emulate a respective virtual node of the first network comprises at least one of:
- transmitting a dummy transmission in the first network as a representation of a respective transmission from said respective virtual node,
- ignoring a transmission to said respective virtual node in the first network,
- storing information directed to said respective virtual node in the first network for later use.

This involves at least the advantage that the first network may remain ignorant of the fact that some of the nodes it believes to exists do not actually exist at all.

According to an embodiment, at least one rule of said set of rules is a conditional rule. The method may then comprise making selectively none, one or more nodes of said second network emulate a respective virtual node of said first network, to which virtual node said linking functionality has associated one of said stored plurality of addresses, only if a precondition of said conditional rule is fulfilled. This involves at least the advantage of contributing even further versatility to the combined operation of the two networks.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a wired building automation network according to prior art,
**figure 2** illustrates a wireless building automation network according to prior art,
**figure 3** illustrates a principle of using mapping and forwarding of communications between a wired and a wireless building automation network,
**figure 4** illustrates schematically a gateway apparatus,
**figure 5** illustrates a principle of producing combined transmissions, and
**figure 6** illustrates examples of communications between the wired and wireless networks.

### DETAILED DESCRIPTION

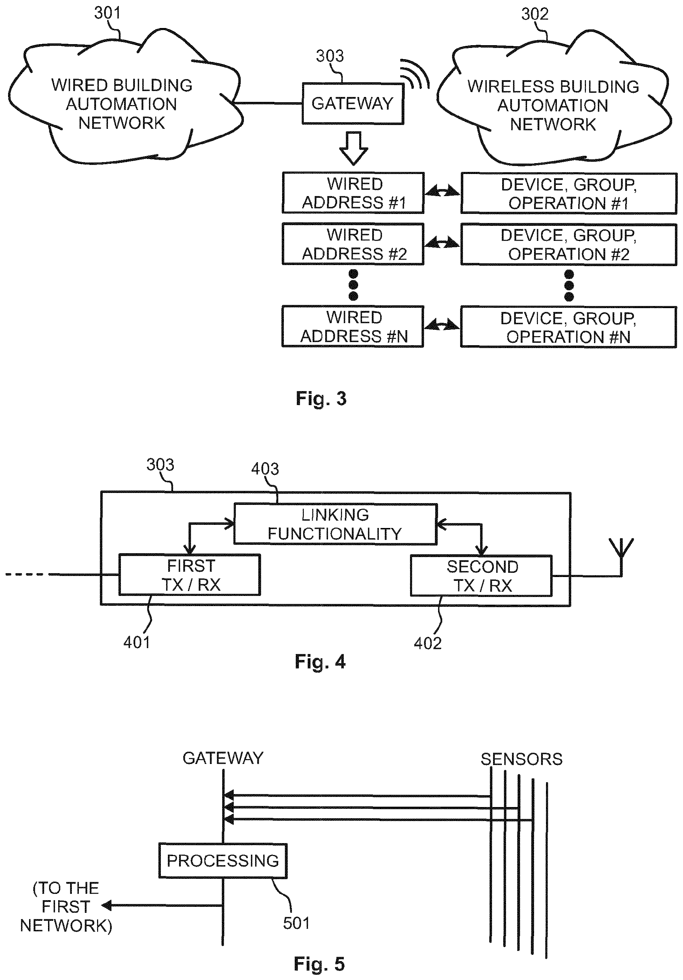

Fig. 3 illustrates a principle of linking communications between a first network 301 on the left and a second network 302 on the right.

The first network 301 is a wired, addressed lighting network. As a non-limiting example, one may consider a DALI-based network that mainly connects lighting-related devices, like the one in fig. 1. According to a more general characterisation, the first network 301 is configured to use master-slave type communications on a wired control bus, so that a master device (not separately shown in fig. 3) allocates bus addresses to slave devices and maintains information about which devices (with which abilities) are connected to the bus. The master device also coordinates the operation of the devices in the first network 301, for example by receiving inputs from sensors, switches, and/or other input-generating devices connected to the bus and transmitting control commands to luminaires, shade actuators, and/or other actuator devices connected to the bus.

The second network 302 is a wireless, addressed lighting network. As a non-limiting example, one may consider a mesh-type wireless network that mainly comprises sensor-equipped lighting devices, such as the one in fig. 2. The second network 302 does not apply master-slave type communications but a communications protocol in which each communicating device may independently take part in the exchange of control information between devices. A device in the second network 302 may apply self-learning algorithms that allow it to adapt to the surroundings where it has been installed. As an example, luminaires in the second network 302 may monitor the repetitive occurrence of wireless transmissions that indicate other luminaires nearby having reacted to detected presence and/or movement. If it seems that the self-learning luminaire in question frequently sees movement itself shortly after receiving such transmissions, or if there seems to frequently occur some other kind of chain of consecutive events with sufficient regularity, it may learn to preparatorily light up already when it receives the next transmission. As a result, users moving in an environment illuminated by luminaires of the second network 302 may experience the lights turning on ahead of their movement, without anyone having to manually configure the luminaires for such operation.

A gateway apparatus 303 is provided for linking the communications between the first network 301 and the second network 302. As shown in more detail in fig. 4, the gateway apparatus 303 comprises a first communications transceiver 401 for communicating with devices of the first network 301 and a second communications transceiver 402 for communicating with devices of the second network 302. In conformity with the communications practices in the first and second networks respectively, the first communications transceiver 401 is configured for communications over a wired control bus, while the second communications transceiver 402 is configured for wireless communications such as radio communications according to a standard suitable for an environment served by the second network 302, like the Bluetooth or WiFi standards for example.

A linking functionality 403 is coupled between the first and second communications transceivers 401 and 402 in the gateway apparatus 303. Fig. 3 illustrates schematically a principle, according to which the linking functionality 403 is configured to receive and store a plurality (here: N, where N is a positive integer larger than 2) of addresses of an addressing scheme used in the first network 301 to identify nodes of the first network 301. The linking functionality 403 is also configured to perform mapping and forwarding of communications between the first and second networks 301 and 302. This mapping and forwarding takes place in accordance with a stored set of rules. In particular, with respect to communications, the linking functionality 403 makes selectively none, one or more nodes of the second network 302 emulate a respective virtual node of the first network 301. Such a virtual node is one to which the linking functionality 403 has associated one of said stored plurality of addresses.

A virtual node of the first network 301 is an entity that communicates with other devices in the first network 301 (in particular, with a master device of the first network 301 if the first network 301 is configured to use master-slave type communications) as if it were a real node in the first network 301, although it is not. Above, it was mentioned that the gateway apparatus 303 may make none, one or more nodes of the second network 302 emulate a respective virtual node of the first network 301. Examples of all these are described in more detail in the following.

As a first example, one node of the second network 302 is made to emulate a respective virtual node of the first network 301. This means that while the (master device of the) first network 301 acts as if it were communicating with just another node connected to the wired control bus, in reality it is communicating with a wireless node of the second network 302. The linking functionality 403 in the gateway apparatus 303 has associated with said wireless node a certain address of its stored addresses of an addressing scheme used in the first network 301. Using said associated address, the linking functionality 403 performs its mapping and forwarding task. While said wireless node of the second network 302 operates and communicates according to the communications practices applied in the second network 302, the (master device of the) first network 301 can transmit and/or receive the same information according to the communications practices in the first network 301, as if communicating with an ordinary wired node known in the first network by said associated address.

As a second example, a plurality (more than one) of nodes of the second network 302 are made to emulate a respective virtual node of the first network 301. This means that while the (master device of the) first network 301 acts as if it were communicating with just another (individual) node connected to the wired control bus, in reality it is communicating with a group of wireless nodes of the second network 302. The linking functionality 403 is configured to associate a certain address of its stored plurality of addresses with a group of nodes of the second network 302. Said group of nodes thus represent a common virtual node of the first network 301.

Said group of nodes may be transmitting nodes of the second network 302, like movement sensors that transmit a corresponding indication every time they detect movement. In a wireless network, especially one of the mesh-type, it is possible to allow each transmitting node to emit such a movement-indicating transmission essentially immediately, without binding the transmissions to any predetermined timetable. In a master-slave type wired control bus, however, transmitting (slave) nodes are typically bound to obey a certain timetable of transmitting turns. One of the mapping and forwarding functions of the linking functionality 403 may thus be to time the transmission it forwards to the first network 301 so that it obeys the appropriate timetable.

It is also typical to wireless, mesh-type building automation networks that sensors may appear in a considerably denser pattern than in a wired network. The wireless network may have a number of luminaires in a room, each equipped with a sensor of its own, while a wired network would cover a room of the same size with a single sensor with a sufficiently wide field of view. Accordingly, one of the stored rules mentioned earlier may configure the linking functionality 403 to combine transmissions received from a group of transmitting nodes (of the second network) into a common transmission and to transmit the common transmission in the first network as if coming from a common virtual transmitting node (of the first network) . As a part of such operation, the linking functionality may be configured to receive the transmissions from the group of transmitting nodes in accordance with a transmissions schedule - if one exists - of the second network and to transmit the common transmission in accordance with a transmissions schedule of the first network.

Additionally or alternatively, the group of nodes in the second network, which together represent a common virtual node of the first network, may be receiving nodes such as luminaires that may be made to receive communications such as lighting commands from the first network. In such a case, the linking functionality 403 in the gateway apparatus 303 is configured to associate one of the previously mentioned stored plurality of addresses with a group of respective receiving nodes of the second network. Thus, the group of receiving nodes will represent a common virtual receiving node of the first network. In accordance with one of the stored set of rules, the linking functionality 403 is configured to forward information it received for such a common virtual receiving node in the first network. It forwards it in the form of similar information to said group of receiving nodes in the second network.

As a third example, again in accordance with one of the stored set of rules, the linking functionality 403 may be configured to make none of the nodes of the second network 302 emulate a respective virtual node of the first network 301. In other words, the (master device of) the first network 301 is under the assumption that - and operates as if - there existed a node in the first network 301 that has one of the addresses received and stored at the linking functionality 403. However, any communications with such a node will only involve the gateway apparatus 303 and not any of the further nodes of the second network 302.

Several possibilities exist for how the linking functionality 403 in the gateway apparatus 303 may operate in the last-mentioned example. According to one possibility, the linking functionality 403 may transmit a dummy transmission in the first network as a representation of a respective transmission from the virtual node that actually has no existing counterpart in the second network. According to another possibility, the linking functionality 403 may just ignore a transmission to such a virtual node in the first network. According to yet another possibility, the linking functionality 403 may store information that was directed to such a virtual node in the first network for later use. This last-mentioned possibility involves an aspect of preparing for the possible case in which the linking functionality 403 may later activate a new mapping rule that makes one or more of the nodes of the second network 302 emulate a virtual node of the first network for which there was no counterpart previously. In such a case, the information that was previously stored may be taken into use once the new mapping rule has been taken into active use.

Further advantageous examples are described in the following. In some cases, these further examples go under what has been already described in the three examples above and represent further variations or developments thereof. In other cases, the further examples represent other ways of applying the basic idea in practice.

Fig. 5 is related to a case in which a group of five sensor nodes of the second network together represent a common virtual sensor node of the first network. In the example case of fig. 5, the first, third, and fourth sensor nodes in the group have each transmitted an indication of detection. One possibility would be that whenever any of said five sensor nodes transmits an indication of detection, the linking functionality in the gateway just forwards a corresponding indication of detection in the first network as if the common virtual node of the first network had made a corresponding detection. Fig. 5 illustrates another possibility, in which the linking functionality in the gateway produces a common, combined transmission by processing the indications of detection it received from the sensor nodes of the group. The processing at block 501 may involve e.g. calculating a mean value of the detection indications received from the sensor nodes during a period of time, or taking an extreme value of the detection indications received from the sensor nodes during a period of time, or scaling the detection indications (or a result calculated therefrom) into a different range of allowable values.

Yet another form of processing is one where the linking functionality in the gateway adapts the transmission of detection indications to a transmission practice applied in the first network. As an example, the first network may be built to use sensors, a master device, and sensor-triggered luminaires so that each sensor only sends a trigger signal (detection indication) to the master device as a response to a first detection it made, and thereafter a re-trigger at some predefined regular interval (for example, every 60 seconds) if it has made one or more further detections during that time. These trigger signals and re-triggers make the master device transmit corresponding lighting commands to the luminaires that thus become sensor-triggered even if they actually just follow commands from the master device. The sensors in the second network, in turn, may be such that they transmit a detection indication whenever they detect something. In such a case, the linking functionality in the gateway apparatus may forward the first detection indication as a trigger signal to the first network and thereafter transmit a re-trigger every 60 seconds if any of the sensors of the group has intermittently transmitted one or more detection indications.

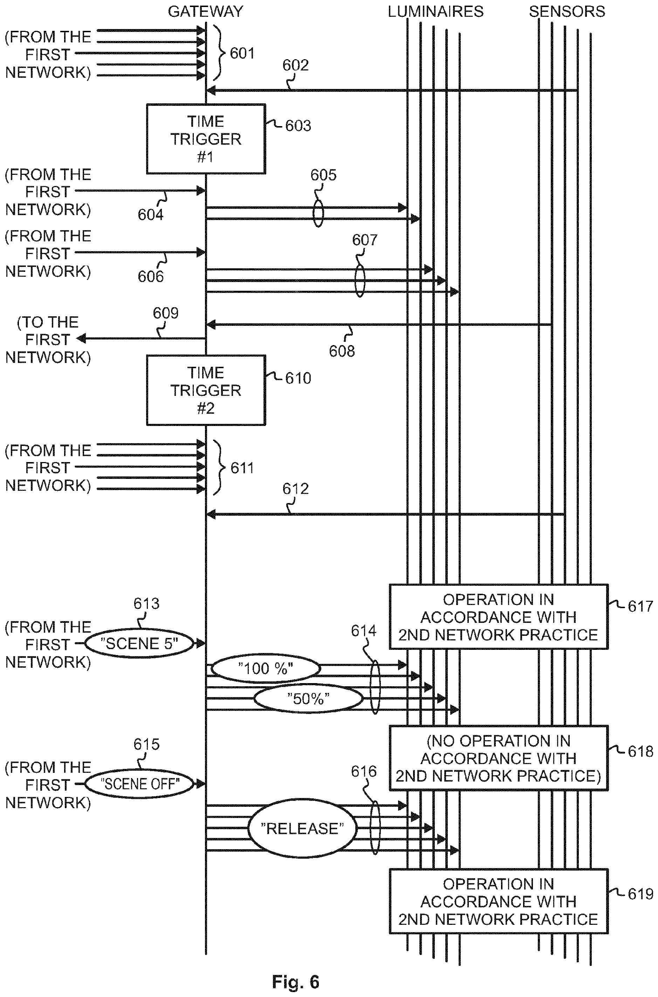

Fig. 6 illustrates examples of operation in cases where at least one rule in the above-mentioned set of rules is a conditional rule. In other words, the linking functionality 403 in the gateway apparatus 303 is configured to make selectively none, one, of more nodes of the second network 302 emulate a respective virtual node of the first network, to which virtual node the linking functionality has associated one of its stored plurality of addresses, only if a precondition of a conditional rule is fulfilled.

The upper part in fig. 6 corresponds to a case in which the precondition comprises a time condition. This means that the linking functionality 403 is configured to, consequently, make selectively none, one or more nodes of the second network 302 emulate a respective virtual node of the first network 301, to which virtual node said linking functionality has associated one of its stored plurality of addresses, only during a predetermined period of time.

At the very top of fig. 6, such a predetermined period of time has not yet begun, so communications 601 from the first network, directed to one or more virtual nodes the addresses of which the linking functionality has stored, do not cause any reaction. Likewise, the linking functionality does not forward anything to the first network based on a transmission 602 where one of the sensors in the second network indicates having made a detection. Both the first and second networks may still work within themselves as intended. For example, if the second network is constituted by sensor-equipped, self-learning luminaires that react to wireless transmissions indicating detected movement by each other, such autonomous control of lighting may continuously go on within the area covered by the second network. The second network may include - and operate in accordance with - also other normal, intended functionalities, like groups of luminaires operating in coordinated manner and/or one or more luminaires that follow the commands transmitted by a switch panel or other control device.

A time trigger occurs at 603. The time trigger may be for example some predetermined time of the day, like the agreed beginning of a working day at the office. Now the time condition that constitutes the precondition of a conditional rule is fulfilled, so the linking functionality makes certain nodes of the second network emulate corresponding virtual nodes of the first network. As an example, lighting commands 604 and 606 are forwarded to predetermined luminaires at 605 and 607 respectively, and a detection indication 608 from a sensor node in the second network is forwarded to the first network at 609 as a representative of a transmission from a corresponding virtual node of the first network. Another time trigger occurs at 610: for example, the working day is over. After that, the two networks operate again separately, like they did before the time trigger at 603, as shown by the non-forwarded transmissions 611 and 612.

The lower part of fig. 6 corresponds to a case in which the precondition comprises a trigger event condition. A trigger event is an event that takes place, other than just some predetermined time. As an example, the trigger event may be a predetermined transmission like a certain lighting command received from (the master device of) the first network. In fig. 6, the trigger event is a so-called scene command 613 meant to make each targeted node of the first network to assume a pre-programmed state associated with the respective scene. An often-used example of a scene is a presentation scene in a meeting room, in which a single scene command addressed to all luminaires of the room makes the luminaires closest to the wall-mounted display or silver screen dim very low or off and the other luminaires dim to a predetermined level lower than normal illumination.

In the current example, when a predetermined trigger event (reception of the scene command 613) has occurred first, the linking functionality in the gateway apparatus makes a group of nodes in the second network emulate a respective virtual node of the first network. Implementing a scene can be done in at least two ways. The linking functionality could forward the scene command as such to those luminaires that have been associated with the stored address(es) to which the scene command was directed, so that each of said luminaires would respond by assuming a pre-programmed, luminaire-specific state that corresponds to that scene. Fig. 6 illustrates another approach, in which the linking functionality in the gateway apparatus has been programmed to interpret the scene command and to send corresponding, luminaire-specific illumination level commands to the appropriate luminaires in the second network. These transmitted commands are shown as 614 in fig. 6.

Even if the desired, luminaire-specific responses to a scene command (or other kind of "shorthand" command) were stored in the luminaires themselves, it may be advantageous to store these in the gateway apparatus as well. Namely, it is not uncommon that a master device in the first network may interrogate node devices of the first network for their stored parameter values. If a master device sends, to an address stored in the gateway apparatus as the address of a virtual node, a request to return some stored parameter value, it may be advantageous to make the gateway apparatus respond directly based on its own stored information, without even having to send any corresponding request further towards the nodes of the second network that together represent the common virtual node.

A similar series of events occurs at 615 and 616: the reception of a lighting command (here: scene off) 615 from the first network constitutes a trigger event, and as a response the linking functionality in the gateway apparatus forwards corresponding commands 616 to those luminaire nodes of the second network that were to emulate a common virtual node of the first network to which the lighting command 615 was addressed.

Blocks 617, 618, and 619 on the right in fig. 6 illustrate schematically how the respective nodes of the second network may temporarily change their way of operation to emulate a corresponding virtual node of the first network only for a certain period of time. Before the occurrence of the trigger event, as shown by block 617, the nodes of the second network operate completely according to the protocols and practices of the second network. After the occurrence of the triggering event, as shown by block 618, at least those luminaire nodes affected by the trigger event temporarily cease to operate according to the protocols and practices of the second network and obey the commands from the first network instead. This state of operation is released after the occurrence of the next triggering event, so in the end - as shown by block 619 - the nodes of the second network operate again completely according to the protocols and practices of the second network.

The examples shown in fig. 6 may be considered as special, exemplary instances of a more general principle, in which a logic layer in the master device of the first network is utilised to add centrally controlled logic to node devices of the second network that otherwise apply distributed logic. The node devices with distributed, automated logic are allowed to operate automatically, controlled by their own distributed logic, in selected circumstances while under other circumstances they are made to operate under more centralised control that ultimately comes from the master device of the first network.

Several possibilities exist for programming the gateway apparatus for appropriate operation. Some of these possibilities are described in the following.

According to a first possibility, the linking functionality in the gateway apparatus may automatically group nodes of the second network to represent a common virtual node of the first network. Such automatic grouping may take place in conformity with one or more criteria. For example, the linking functionality may automatically group all nodes of the second network based on their node type: all luminaire nodes of the second network to represent a common virtual luminaire node of the first network; all sensor nodes of the second network to represent a common virtual sensor node of the first network; and so on. As another example, some more advanced criteria than just node type may be used: all luminaire nodes of corridor type to one group and all luminaire nodes of open space type to another group; all nodes in the same floor or zone of a building to a group of their own; all nodes within a certain hop count or RSSI level from the gateway apparatus to a group of their own; separate groups based on previously observed activity levels; and so on. This kind of criteria can be combined in many ways, like: all nodes of luminaire type that are located in a certain floor and within a certain maximum hop count from the gateway apparatus.

According to a second possibility, an installing technician or other member of suitably qualified personnel may manually program the gateway apparatus to recognise appropriate nodes of the second network as constituting a group. The person responsible for such programming may have a programming device, like a portable electronic device equipped with an application program and wireless communications capability. Node devices of the second network may be visible on a display of such a portable electronic device, so that the programmer may select them in accordance with any criterion and communicate to the gateway apparatus an order to make the selected nodes represent a common virtual node of the first network.

Irrespective of the way in which the programming of the gateway apparatus takes place, it may be advantageous to configure the linking functionality to transmit in the first network a sufficient number of requests to receive an address for a virtual node device of the first network. The linking functionality may transmit such a request every time in response to there being stored an emulating rule without any address yet of the virtual node to be emulated. In other words, as soon as the linking functionality knows, on the basis of programming of some kind, that it should make none, one, or more nodes of a second network emulate a common virtual node of the first network in some particular way, it transmits to the master device of the first network a request for receiving an address for such a virtual node. The address-granting protocol of the first network is then relied upon to ensure that the linking functionality in the gateway apparatus will receive the requested address and the master device (or other device responsible for granting addresses in the first network) becomes aware of the existence of a corresponding new (virtual) node in the first network.

A significant advantage of a gateway apparatus of the kind described above is that none of the other involved devices need to differ from their regular, standard-conformant structure and operation. A master device of the first network may be kept completely unaware of the fact that some of the addressed nodes it communicates with are actually virtual nodes emulated - with the help of a gateway apparatus - by none, one, or more nodes of a completely different network. Similarly, a transmitting node device in the second network does not need to know that some of its transmissions will travel unusually far in some converted form. A receiving node device of the second network may be kept completely unaware of the fact that some of the controlling transmissions it receives and reacts upon actually originated from a gateway apparatus that in turn generated them on the basis of information it received from a completely different network. This allows for example assembling the building automation system using mostly just standard-compliant node devices that can be obtained even from different manufacturers. Yet, the completed building automation system will be capable of operating in ways that the original designers of such devices did not actively think about.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. An apparatus for linking communications between a first network, which is a wired, addressed lighting network applying master-slave type communications on a wired control bus, and a second network, which is a wireless, addressed lighting network applying a communications protocol in which each communicating device may independently take part in the exchange of control information between devices, the apparatus comprising:
- a first communications transceiver for communicating with devices of said first network,
- a second communications transceiver for communicating with devices of said second network, and
- a linking functionality coupled between said first and second communications transceivers;
wherein said linking functionality is configured to receive and store a plurality of addresses of an addressing scheme used in said first network to identify nodes of said first network,
and wherein said linking functionality is configured to perform mapping and forwarding of communications between said first and second networks so that, with respect to communications and in accordance with a stored set of rules, it makes selectively none, one or more nodes of said second network emulate a respective virtual node of said first network to which virtual node said linking functionality has associated one of said stored plurality of addresses,
- the linking functionality is configured to associate a first address of said stored plurality of addresses with a group of respective receiving nodes of the second network, said group of receiving nodes thus representing a common virtual receiving node of said first network, and
- in accordance with a second rule of said stored set of rules, the linking functionality is configured to forward information it received for said common virtual receiving node in the first network in the form of information to said group of receiving nodes in the second network,
and wherein making one node of said second network emulate a respective virtual node of said first network involves said first network communicating with a wireless node of the second network as if it were communicating with a node of said first network, making more nodes of said second network emulate a respective virtual node of said first network involves said first network communicating with a plurality of wireless nodes of the second network as if it were communicating with a node of said first network, and making no node of said second network emulate a respective virtual node of said first network involves said first network communicating with said apparatus as if it were communicating with a node of said first network, without communicating with any wireless node of the second network.

2. An apparatus according to claim 1, wherein:
- the linking functionality is configured to associate a second address of said stored plurality of addresses with a group of transmitting nodes of the second network, said group of transmitting nodes thus representing a common virtual transmitting node of said first network, and
- in accordance with a first rule of said stored set of rules, the linking functionality is configured to combine transmissions received from said group of transmitting nodes into a common transmission and to transmit the common transmission in the first network as if coming from said common virtual transmitting node.

3. An apparatus according to claim 2, wherein the linking functionality is configured to receive said transmissions from said group of transmitting nodes in accordance with a transmissions schedule of said second network and to transmit said common transmission in accordance with a transmissions schedule of said first network.

4. An apparatus according to any of the preceding claims, wherein:
- the linking functionality is configured to transmit in the first network a request to receive an address for a virtual node device of the first network, in response to there being stored an emulating rule among said set of rules without any address yet of the virtual node to be emulated.

5. An apparatus according to any of the preceding claims, wherein in accordance with a third rule of said stored set of rules, the linking functionality is configured to make none of the nodes of the second network emulate a respective virtual node of the first network, by executing at least one of:
- transmitting a dummy transmission in the first network as a representation of a respective transmission from said respective virtual node,
- ignoring a transmission to said respective virtual node in the first network,
- storing information directed to said respective virtual node in the first network for later use.

6. An apparatus according to any of the preceding claims, wherein:
- at least one rule of said set of rules is a conditional rule, and
- the linking functionality is configured to, consequently, make selectively none, one or more nodes of said second network emulate a respective virtual node of said first network, to which virtual node said linking functionality has associated one of said stored plurality of addresses, only if a precondition of said conditional rule is fulfilled.

7. An apparatus according to claim 6, wherein said precondition comprises a time condition, so that the linking functionality is configured to, consequently, make selectively none, one or more nodes of said second network emulate a respective virtual node of said first network, to which virtual node said linking functionality has associated one of said stored plurality of addresses, only during a predetermined period of time.

8. An apparatus according to claim 6 or 7, wherein said precondition comprises a trigger event condition, so that the linking functionality is configured to, consequently, make selectively none, one or more nodes of said second network emulate a respective virtual node of said first network, to which virtual node said linking functionality has associated one of said stored plurality of addresses, only if a predetermined trigger event has occurred first.

9. A method for linking communications between a first network, which is a wired, addressed lighting network applying master-slave type communications on a wired control bus, and a second network, which is a wireless, addressed lighting network applying a communications protocol in which each communicating device may independently take part in the exchange of control information between devices, the method comprising:
- receiving and storing a plurality of addresses of an addressing scheme used in said first network to identify nodes of said first network,
- mapping and forwarding communications between said first and second networks,
- associating a first address of said stored plurality of addresses with a group of respective receiving nodes of the second network, said group of receiving nodes thus representing a common virtual receiving node of said first network, and
- in accordance with a second rule of said stored set of rules, forwarding information received for said common virtual receiving node in the first network in the form of information to said group of receiving nodes in the second network;
wherein said mapping and forwarding involves, with respect to communications and in accordance with a stored set of rules, selectively making none, one or more nodes of said second network emulate a respective virtual node of said first network to which virtual node said linking functionality has associated one of said stored plurality of addresses,
and wherein making one node of said second network emulate a respective virtual node of said first network involves said first network communicating with a wireless node of the second network as if it were communicating with a node of said first network, making more nodes of said second network emulate a respective virtual node of said first network involves said first network communicating with a plurality of wireless nodes of the second network as if it were communicating with a node of said first network, and making no node of said second network emulate a respective virtual node of said first network involves said first network communicating with said apparatus as if it were communicating with a node of said first network, without communicating with any wireless node of the second network.

10. A method according to claim 9, comprising:
- associating a second address of said stored plurality of addresses with a group of transmitting nodes of the second network, said group of transmitting nodes thus representing a common virtual transmitting node of said first network, and
- in accordance with a first rule of said stored set of rules, combining transmissions received from said group of transmitting nodes into a common transmission and transmitting the common transmission in the first network as if coming from said common virtual transmitting node.

11. A method according to any of claims 9 or 10, comprising:
- transmitting in the first network a request to receive an address for a virtual node device of the first network, in response to there being stored an emulating rule among said set of rules without any address yet of the virtual node to be emulated.

12. A method according to any of claims 9 to 11, wherein said making of none of the nodes of the second network emulate a respective virtual node of the first network comprises at least one of:
- transmitting a dummy transmission in the first network as a representation of a respective transmission from said respective virtual node,
- ignoring a transmission to said respective virtual node in the first network,
- storing information directed to said respective virtual node in the first network for later use.

13. A method according to any of claims 9 to 12, wherein:
- at least one rule of said set of rules is a conditional rule, and
- the method comprises, consequently, making selectively none, one or more nodes of said second network emulate a respective virtual node of said first network, to which virtual node said linking functionality has associated one of said stored plurality of addresses, only if a precondition of said conditional rule is fulfilled.

## Patentansprüche

1. Gerät zum Verlinken von Kommunikationen zwischen einem ersten Netzwerk, das ein drahtgebundenes adressierbares Beleuchtungsnetzwerk ist, das Kommunikationen vom Master-Slave-Typ auf einem drahtgebundenen Steuerbus verwendet, und einem zweiten Netzwerk, das ein drahtloses adressierbares Beleuchtungsnetzwerk ist, das ein Kommunikationsprotokoll verwendet, bei dem jede Kommunikationsvorrichtung unabhängig am Austausch von Steuerinformationen zwischen Vorrichtungen teilnehmen kann, wobei das Gerät umfasst:
- einen ersten Kommunikationstransceiver zum Kommunizieren mit Vorrichtungen des ersten Netzwerks,
- einen zweiten Kommunikationstransceiver zum Kommunizieren mit Vorrichtungen des zweiten Netzwerks, und
- eine Verlinkungsfunktionalität, die zwischen den ersten und den zweiten Kommunikationstransceiver gekoppelt ist;
wobei die Verlinkungsfunktionalität dazu konfiguriert ist, eine Mehrzahl von Adressen eines Adressierungsschemas zu empfangen und zu speichern, die in dem ersten Netzwerk verwendet werden, um Knoten des ersten Netzwerks zu identifizieren,
und wobei die Verlinkungsfunktionalität dazu konfiguriert ist, ein Mapping und eine Weiterleitung von Kommunikationen zwischen dem ersten und dem zweiten Netzwerk derart durchzuführen, dass sie hinsichtlich Kommunikationen und in Übereinstimmung mit einem gespeicherten Satz von Regeln selektiv bewirkt, dass kein, ein oder mehrere Knoten des zweiten Netzwerks einen jeweiligen virtuellen Knoten des ersten Netzwerks emuliert, welchem virtuellen Knoten die Verlinkungsfunktionalität eine von der gespeicherten Mehrzahl von Adressen zugeordnet hat,
wobei die Verlinkungsfunktionalität dazu konfiguriert ist, eine erste Adresse der gespeicherten Mehrzahl von Adressen einer Gruppe von jeweiligen Empfangsknoten des zweiten Netzwerks zuzuordnen, wobei die Gruppe von Empfangsknoten somit einen gemeinsamen virtuellen Empfangsknoten des ersten Netzwerks repräsentiert, und
- wobei die Verlinkungsfunktionalität in Übereinstimmung mit einer zweiten Regel des gespeicherten Satzes von Regeln dazu konfiguriert ist, Informationen, die sie für den gemeinsamen virtuellen Empfangsknoten in dem ersten Netzwerk empfangen hat, in der Form von Informationen an die Gruppe von Empfangsknoten in dem zweiten Netzwerk weiterzuleiten,
und wobei das Bewirken, dass ein Knoten des zweiten Netzwerks einen jeweiligen virtuellen Knoten des ersten Netzwerks emuliert, beinhaltet, dass das erste Netzwerk mit einem drahtlosen Knoten des zweiten Netzwerks so kommuniziert, als ob es mit einem Knoten des ersten Netzwerks kommunizieren würde, wobei das Bewirken, dass mehrere Knoten des zweiten Netzwerks einen jeweiligen virtuellen Knoten des ersten Netzwerks emulieren, beinhaltet, dass das erste Netzwerk mit einer Mehrzahl von drahtlosen Knoten des zweiten Netzwerks so kommuniziert, als ob es mit einem Knoten des ersten Netzwerks kommunizieren würde, und das Bewirken, dass kein Knoten des zweiten Netzwerks einen jeweiligen virtuellen Knoten des ersten Netzwerks emuliert, beinhaltet, dass das erste Netzwerk mit dem Gerät so kommuniziert, als ob es mit einem Knoten des ersten Netzwerks kommunizieren würde, ohne mit irgendeinem drahtlosen Knoten des zweiten Netzwerks zu kommunizieren.

2. Gerät nach Anspruch 1, wobei:
- die Verlinkungsfunktionalität dazu konfiguriert ist, eine zweite Adresse der gespeicherten Mehrzahl von Adressen einer Gruppe von Übertragungsknoten des zweiten Netzwerks zuzuordnen, wobei die Gruppe von Übertragungsknoten somit einen gemeinsamen virtuellen Übertragungsknoten des ersten Netzwerks repräsentiert, und
- die Verlinkungsfunktionalität in Übereinstimmung mit einer ersten Regel des gespeicherten Satzes von Regeln dazu konfiguriert ist, Übertragungen, die von der Gruppe von Übertragungsknoten empfangen werden, in eine gemeinsame Übertragung zu kombinieren und die gemeinsame Übertragung in dem ersten Netzwerk so zu übertragen, als ob sie von dem gemeinsamen virtuellen Übertragungsknoten käme.

3. Gerät nach Anspruch 2, wobei die Verlinkungsfunktionalität dazu konfiguriert ist, die Übertragungen von der Gruppe von Übertragungsknoten in Übereinstimmung mit einem Übertragungsplan des zweiten Netzwerks zu empfangen und die gemeinsame Übertragung in Übereinstimmung mit einem Übertragungsplan des ersten Netzwerks zu übertragen.

4. Gerät nach einem der vorhergehenden Ansprüche, wobei:
- die Verlinkungsfunktionalität dazu konfiguriert ist, in dem ersten Netzwerk eine Anfrage zum Empfangen einer Adresse für eine virtuelle Knotenvorrichtung des ersten Netzwerks in Antwort darauf zu übertragen, dass dort eine Emulationsregel aus dem Satz von Regeln noch ohne irgendeine Adresse des zu emulierenden virtuellen Knotens gespeichert ist.

5. Gerät nach einem der vorhergehenden Ansprüche, wobei die Verlinkungsfunktionalität in Übereinstimmung mit einer dritten Regel des gespeicherten Satzes von Regeln dazu konfiguriert ist zu bewirken, dass keiner von den Knoten des zweiten Netzwerks einen jeweiligen virtuellen Knoten des ersten Netzwerks emuliert, indem wenigstens eines von Folgenden ausgeführt wird:
- Übertragen einer Dummy-Übertragung in dem ersten Netzwerk als eine Repräsentation einer jeweiligen Übertragung von dem jeweiligen virtuellen Knoten,
- Ignorieren einer Übertragung an den jeweiligen virtuellen Knoten in dem ersten Netzwerk,
- Speichern von Informationen über den jeweiligen virtuellen Knoten in dem ersten Netzwerk für eine spätere Verwendung.

6. Gerät nach einem der vorhergehenden Ansprüche, wobei:
- wenigstens eine Regel von dem Satz von Regeln eine bedingte Regel ist, und
- die Verlinkungsfunktionalität dazu konfiguriert ist, nur dann, wenn eine Vorbedingung der bedingten Regel erfüllt ist, anschließend zu bewirken, dass selektiv kein, ein oder mehrere Knoten des zweiten Netzwerks einen jeweiligen virtuellen Knoten des ersten Netzwerks emuliert, welchem virtuellen Knoten die Verlinkungsfunktionalität eine der gespeicherten Mehrzahl von Adressen zugeordnet hat.

7. Gerät nach Anspruch 6, wobei die Vorbedingung eine Zeitbedingung derart umfasst, dass die Verlinkungsfunktionalität nur während einer vorbestimmten Zeitperiode dazu konfiguriert ist, anschließend zu bewirken, dass selektiv kein, ein oder mehrere Knoten des zweiten Netzwerks einen jeweiligen virtuellen Knoten des ersten Netzwerks emuliert, welchem virtuellen Knoten die Verlinkungsfunktionalität eine von der gespeicherten Mehrzahl von Adressen zugeordnet hat.

8. Gerät nach Anspruch 6 oder 7, wobei die Vorbedingung eine Triggerereignisbedingung derart umfasst, dass die Verlinkungsfunktionalität nur dann, wenn ein vorbestimmtes Triggerereignis erstmals aufgetreten ist, dazu konfiguriert ist, anschließend zu bewirken, dass selektiv kein, ein oder mehrere Knoten des zweiten Netzwerks einen jeweiligen virtuellen Knoten des ersten Netzwerks emuliert, welchem virtuellen Knoten die Verlinkungsfunktionalität eine von der gespeicherten Mehrzahl von Adressen zugeordnet hat.

9. Verfahren zum Verlinken von Kommunikationen zwischen einem ersten Netzwerk, das ein drahtgebundenes adressierbares Beleuchtungsnetzwerk ist, das Kommunikationen vom Master-Slave-Typ auf einem drahtgebundenen Steuerbus verwendet, und einem zweiten Netzwerk, das ein drahtloses adressierbares Beleuchtungsnetzwerk ist, das ein Kommunikationsprotokoll verwendet, bei dem jede Kommunikationsvorrichtung unabhängig am Austausch von Steuerinformationen zwischen Vorrichtungen teilnehmen kann, wobei das Verfahren umfasst:
- Empfangen und Speichern einer Mehrzahl von Adressen eines Adressierschemas, die in dem ersten Netzwerk verwendet werden, um Knoten des ersten Netzwerks zu identifizieren,
- Mappen und Weiterleiten von Kommunikationen zwischen dem ersten und dem zweiten Netzwerk,
- Zuordnen einer ersten Adresse der gespeicherten Mehrzahl von Adressen zu einer Gruppe von jeweiligen Empfangsknoten des zweiten Netzwerks, wobei die Gruppe von Empfangsknoten somit einen gemeinsamen virtuellen Empfangsknoten des ersten Netzwerks repräsentiert, und
- in Übereinstimmung mit einer zweiten Regel des gespeicherten Satzes von Regeln, Weiterleiten von Informationen, die für den gemeinsamen virtuellen Empfangsknoten empfangen werden, in dem ersten Netzwerk, in der Form von Informationen an die Gruppe von Empfangsknoten in dem zweiten Netzwerk;
wobei das Mapping und das Weiterleiten hinsichtlich Kommunikationen und in Übereinstimmung mit einem gespeicherten Satz von Regeln beinhaltet, dass selektiv bewirkt wird, dass kein, ein oder mehrere Knoten des zweiten Netzwerks einen jeweiligen virtuellen Knoten des ersten Netzwerks emuliert, welchem virtuellem Knoten die Verlinkungsfunktionalität eine von der gespeicherten Mehrzahl von Adressen zugeordnet hat,
und wobei das Bewirken, dass ein Knoten des zweiten Netzwerks einen jeweiligen virtuellen Knoten des ersten Netzwerks emuliert, beinhaltet, dass das erste Netzwerk mit einem drahtlosen Knoten des zweiten Netzwerks so kommuniziert, als ob es mit einem Knoten des ersten Netzwerks kommunizieren würde, wobei das Bewirken, dass mehrere Knoten des zweiten Netzwerks einen jeweiligen virtuellen Knoten des ersten Netzwerks emulieren, beinhaltet, dass das erste Netzwerk mit einer Mehrzahl von drahtlosen Knoten des zweiten Netzwerks so kommuniziert, als ob es mit einem Knoten des ersten Netzwerks kommunizieren würde, und das Bewirken, dass kein Knoten des zweiten Netzwerks einen jeweiligen virtuellen Knoten des ersten Netzwerks emuliert, beinhaltet, dass das erste Netzwerk mit dem Gerät so kommuniziert, als ob es mit einem Knoten des ersten Netzwerks kommunizieren würde, ohne mit irgendeinem drahtlosen Knoten des zweiten Netzwerks zu kommunizieren.

10. Verfahren nach Anspruch 9, umfassend:
- Zuordnen einer zweiten Adresse der gespeicherten Mehrzahl von Adressen zu einer Gruppe von Übertragungsknoten des zweiten Netzwerks, wobei die Gruppe von Übertragungsknoten somit einen gemeinsamen virtuellen Übertragungsknoten des ersten Netzwerks repräsentiert, und
- in Übereinstimmung mit einer ersten Regel von dem gespeicherten Satz von Regeln, Kombinieren von Übertragungen, die von der Gruppe von Übertragungsknoten empfangen werden, in eine gemeinsame Übertragung und Übertragen der gemeinsamen Übertragung in dem ersten Netzwerk, als ob sie von dem gemeinsamen virtuellen Übertragungsknoten kommen würde.

11. Verfahren nach einem der Ansprüche 9 oder 10, umfassend:
- Übertragen, in dem ersten Netzwerk, einer Anfrage zum Empfangen einer Adresse für eine virtuelle Knotenvorrichtung des ersten Netzwerks in Antwort darauf, dass dort eine Emulationsregel aus dem Satz von Regeln noch ohne irgendeine Adresse des zu emulierenden virtuellen Knotens gespeichert ist.

12. Verfahren nach einem der Ansprüche 9 bis 11, wobei das Bewirken, dass keiner der Knoten des zweiten Netzwerks einen jeweiligen virtuellen Knoten des ersten Netzwerks emuliert, wenigstens eines von Folgenden umfasst:
- Übertragen einer Dummy-Übertragung in dem ersten Netzwerk als eine Repräsentation einer jeweiligen Übertragung von dem jeweiligen virtuellen Knoten,
- Ignorieren einer Übertragung an den jeweiligen virtuellen Knoten in dem ersten Netzwerk,
- Speichern von Informationen über den jeweiligen virtuellen Knoten in dem ersten Netzwerk für eine spätere Verwendung.

13. Verfahren nach einem der Ansprüche 9 bis 12, wobei:
- wenigstens eine Regel von dem Satz von Regeln eine bedingte Regel ist, und
- das Verfahren umfasst, dass nur dann, wenn eine Vorbedingung der bedingten Regel erfüllt ist, anschließend bewirkt wird, dass selektiv kein, ein oder mehrere Knoten des zweiten Netzwerks einen jeweiligen virtuellen Knoten des ersten Netzwerks emulieren, welchem virtuellen Knoten die Verlinkungsfunktionalität eine von der gespeicherten Mehrzahl von Adressen zugeordnet hat.

## Revendications

1. Appareil permettant de relier les communications entre un premier réseau, qui est un réseau d'éclairage filaire et adressé appliquant des communications de type maître-esclave sur un bus de commande filaire, et un deuxième réseau, qui est un réseau d'éclairage sans fil et adressé appliquant un protocole de communication dans lequel chaque dispositif de communication peut prendre part indépendamment à l'échange d'informations de commande entre les dispositifs, l'appareil comprenant :
- un premier émetteur-récepteur de communication pour communiquer avec les dispositifs dudit premier réseau,
- un deuxième émetteur-récepteur de communication pour communiquer avec les dispositifs dudit deuxième réseau, et
- une fonctionnalité de liaison couplée entre ledit premier et ledit deuxième émetteurs-récepteurs de communication ;
dans lequel ladite fonctionnalité de liaison est configurée pour recevoir et stocker une pluralité d'adresses d'un schéma d'adressage utilisé dans ledit premier réseau pour identifier des nœuds dudit premier réseau, et
dans lequel ladite fonctionnalité de liaison est configurée pour effectuer la mise en correspondance et l'acheminement des communications entre ledit premier et ledit deuxième réseaux de sorte que, en ce qui concerne les communications et conformément à un ensemble de règles stockées, elle amène, de manière sélective, aucun, un ou plusieurs nœuds dudit deuxième réseau à émuler un nœud virtuel respectif dudit premier réseau, auquel nœud virtuel ladite fonctionnalité de liaison a associé l'une de ladite pluralité d'adresses stockées,
- la fonctionnalité de liaison est configurée pour associer une première adresse de ladite pluralité d'adresses stockées à un groupe de nœuds de réception respectifs du deuxième réseau, ledit groupe de nœuds de réception représentant ainsi un nœud de réception virtuel commun dudit premier réseau, et
- conformément à une deuxième règle dudit ensemble de règles stockées, la fonctionnalité de liaison est configurée pour acheminer les informations qu'elle a reçues pour ledit nœud de réception virtuel commun dans le premier réseau sous la forme d'informations audit groupe de nœuds de réception dans le deuxième réseau, et dans lequel le fait d'amener un nœud dudit deuxième réseau à émuler un nœud virtuel respectif dudit premier réseau implique que ledit premier réseau communique avec un nœud sans fil du deuxième réseau comme s'il communiquait avec un nœud dudit premier réseau, le fait d'amener plusieurs nœuds dudit deuxième réseau à émuler un nœud virtuel respectif dudit premier réseau implique que ledit premier réseau communique avec une pluralité de nœuds sans fil du deuxième réseau comme s'il communiquait avec un nœud dudit premier réseau, et le fait de n'amener qu'aucun nœud dudit deuxième réseau à émuler un nœud virtuel respectif dudit premier réseau implique que ledit premier réseau communique avec ledit appareil comme s'il communiquait avec un nœud dudit premier réseau, sans communiquer avec un quelconque nœud sans fil du deuxième réseau.

2. Appareil selon la revendication 1, dans lequel :
- la fonctionnalité de liaison est configurée pour associer une deuxième adresse de ladite pluralité d'adresses stockées à un groupe de nœuds de transmission du deuxième réseau, ledit groupe de nœuds de transmission représentant ainsi un nœud de transmission virtuel commun dudit premier réseau, et
- conformément à une première règle dudit ensemble de règles stockées, la fonctionnalité de liaison est configurée pour combiner les transmissions reçues dudit groupe de nœuds de transmission en une transmission commune et pour transmettre la transmission commune dans le premier réseau comme si elle provenait dudit nœud de transmission virtuel commun.

3. Appareil selon la revendication 2, dans lequel la fonctionnalité de liaison est configurée pour recevoir lesdites transmissions provenant dudit groupe de nœuds de transmission conformément à une planification de transmissions dudit deuxième réseau et pour transmettre ladite transmission commune conformément à une planification de transmissions dudit premier réseau.

4. Appareil selon l'une quelconque des revendications précédentes, dans lequel :
- la fonctionnalité de liaison est configurée pour transmettre, dans le premier réseau, une demande de réception d'une adresse pour un dispositif de nœud virtuel du premier réseau, en réponse au fait qu'une règle d'émulation y est stockée parmi ledit ensemble de règles sans aucune adresse du nœud virtuel à émuler.

5. Appareil selon l'une quelconque des revendications précédentes, dans lequel, conformément à une troisième règle dudit ensemble de règles stockées, la fonctionnalité de liaison est configurée pour n'amener aucun des nœuds du deuxième réseau à émuler un nœud virtuel respectif du premier réseau, en exécutant au moins l'une des opérations suivantes comprenant le fait de :
- transmettre une transmission fictive dans le premier réseau en tant que représentation d'une transmission respective provenant dudit nœud virtuel respectif,
- ignorer une transmission audit nœud virtuel respectif dans le premier réseau,
- stocker des informations destinées audit nœud virtuel respectif dans le premier réseau à des fins d'utilisation ultérieure.

6. Appareil selon l'une quelconque des revendications précédentes, dans lequel :
- au moins une règle dudit ensemble de règles est une règle conditionnelle, et
- la fonctionnalité de liaison est configurée pour, par conséquent, amener, de manière sélective, aucun, un ou plusieurs nœuds dudit deuxième réseau à émuler un nœud virtuel respectif dudit premier réseau, auquel nœud virtuel ladite fonctionnalité de liaison a associé l'une de ladite pluralité d'adresses stockées, uniquement si une condition préalable de ladite règle conditionnelle est remplie.

7. Appareil selon la revendication 6, dans lequel ladite condition préalable comprend une condition temporelle, de sorte que la fonctionnalité de liaison est configurée pour, par conséquent, amener, de manière sélective, aucun, un ou plusieurs nœuds dudit deuxième réseau à émuler un nœud virtuel respectif dudit premier réseau, auquel nœud virtuel ladite fonctionnalité de liaison a associé l'une de ladite pluralité d'adresses stockées, uniquement pendant une période de temps prédéterminée.

8. Appareil selon la revendication 6 ou 7, dans lequel ladite condition préalable comprend une condition d'événement déclencheur, de sorte que la fonctionnalité de liaison est configurée pour, par conséquent, amener, de manière sélective, aucun, un ou plusieurs nœuds dudit deuxième réseau à émuler un nœud virtuel respectif dudit premier réseau, auquel nœud virtuel ladite fonctionnalité de liaison a associé l'une de ladite pluralité d'adresses stockées, uniquement si un événement déclencheur prédéterminé s'est produit en premier.

9. Procédé pour relier les communications entre un premier réseau, qui est un réseau d'éclairage filaire et adressé appliquant des communications de type maître-esclave sur un bus de commande filaire, et un deuxième réseau, qui est un réseau d'éclairage sans fil et adressé appliquant un protocole de communication dans lequel chaque dispositif de communication peut prendre part indépendamment à l'échange d'informations de commande entre les dispositifs, le procédé comprenant le fait de :
- recevoir et stocker une pluralité d'adresses d'un schéma d'adressage utilisé dans ledit premier réseau pour identifier les nœuds dudit premier réseau,
- mettre en correspondance et acheminer les communications entre ledit premier et ledit deuxième réseaux,
- associer une première adresse de ladite pluralité d'adresses stockées à un groupe de nœuds de réception respectifs du deuxième réseau, ledit groupe de nœuds de réception représentant ainsi un nœud de réception virtuel commun dudit premier réseau, et
- conformément à une deuxième règle dudit ensemble de règles stockées, acheminer les informations reçues pour ledit nœud de réception virtuel commun dans le premier réseau sous la forme d'informations audit groupe de nœuds de réception dans le deuxième réseau ;
dans lequel ladite mise en correspondance et ledit acheminement impliquent, en ce qui concerne les communications et conformément à un ensemble de règles stockées, d'amener, de manière sélective, aucun, un ou plusieurs nœuds dudit deuxième réseau à émuler un nœud virtuel respectif dudit premier réseau, auquel nœud virtuel ladite fonctionnalité de liaison a associé l'une de ladite pluralité d'adresses stockées, et
dans lequel le fait d'amener un nœud dudit deuxième réseau à émuler un nœud virtuel respectif dudit premier réseau implique que ledit premier réseau communique avec un nœud sans fil du deuxième réseau comme s'il communiquait avec un nœud dudit premier réseau, le fait d'amener plusieurs nœuds dudit deuxième réseau à émuler un nœud virtuel respectif dudit premier réseau implique que ledit premier réseau communique avec une pluralité de nœuds sans fil du deuxième réseau comme s'il communiquait avec un nœud dudit premier réseau, et le fait de n'amener aucun nœud dudit deuxième réseau à émuler un nœud virtuel respectif dudit premier réseau implique que ledit premier réseau communique avec ledit appareil comme s'il communiquait avec un nœud dudit premier réseau, sans communiquer avec un quelconque nœud sans fil du deuxième réseau.

10. Procédé selon la revendication 9, comprenant le fait de :
- associer une deuxième adresse de ladite pluralité d'adresses stockées à un groupe de nœuds de transmission du deuxième réseau, ledit groupe de nœuds de transmission représentant ainsi un nœud de transmission virtuel commun dudit premier réseau, et
- conformément à une première règle dudit ensemble de règles stockées, combiner les transmissions reçues dudit groupe de nœuds de transmission en une transmission commune et transmettre la transmission commune dans le premier réseau comme si elle provenait dudit nœud de transmission virtuel commun.

11. Procédé selon l'une quelconque des revendications 9 ou 10, comprenant le fait de :
- transmettre, dans le premier réseau, une demande de réception d'une adresse pour un dispositif de nœud virtuel du premier réseau, en réponse au fait qu'une règle d'émulation y est stockée parmi ledit ensemble de règles sans aucune adresse du nœud virtuel à émuler.

12. Procédé selon l'une quelconque des revendications 9 à 11, dans lequel ledit fait de n'amener aucun des nœuds du deuxième réseau à émuler un nœud virtuel respectif du premier réseau comprend au moins l'une des étapes comprenant le fait de :
- transmettre une transmission fictive dans le premier réseau en tant que représentation d'une transmission respective provenant dudit nœud virtuel respectif,
- ignorer une transmission audit nœud virtuel respectif dans le premier réseau, et
- stocker des informations destinées audit nœud virtuel respectif dans le premier réseau à des fins d'utilisation ultérieure.

13. Procédé selon l'une quelconque des revendications 9 à 12, dans lequel :
- au moins une règle dudit ensemble de règles est une règle conditionnelle, et
- le procédé comprend, par conséquent, le fait d'amener, de manière sélective, aucun, un ou plusieurs nœuds dudit deuxième réseau à émuler un nœud virtuel respectif dudit premier réseau, auquel nœud virtuel ladite fonctionnalité de liaison a associé l'une de ladite pluralité d'adresses stockées, uniquement si une condition préalable de ladite règle conditionnelle est remplie.
